# EUROPÄISCHE PATENTANMELDUNG

(11) **EP 4 733 039 A1**
(43) Veröffentlichungstag der Anmeldung: **29.04.2026**
(21) Anmeldenummer: 24209077.7
(22) Anmeldetag: 25.10.2024
(51) Int. Cl.: B29C 49/42, B29C 49/78, B29C 49/06, B29K 67/00, B29L 31/00

(54) **VERFAHREN UND VORRICHTUNG ZUM BLASFORMEN**

(71) Anmelder: Eugen Seitz AG, 8623 Wetzikon (CH)
(72) Erfinder: SCHMIDT, Joachim, 8442 Hettlingen (CH)
(74) Vertreter: Clerc, Natalia

(57) **Zusammenfassung**

In einem Verfahren zum Herstellen von Hohlkörpern (H) aus Vorformlingen (V) mittels Blasformen wird
a) ein Vorformling (V) bereitgestellt,
b) wird ein Prozessgas gemäss einer Normalrezeptur kaskadenartig aus mindestens drei Gasspeichern (61, 62, 63, 64) mit unterschiedlichen vorbestimmten Gasdrücken (P1, P2, P3, P4) mit entsprechend ansteigendem Prozessdruck in ein Innenvolumen eines der Vorformlinge (V) eingebracht, wobei der zuletzt verwendete Gasspeicher (64) den höchsten vorbestimmten Gasdruck (P4) aufweist, und
c) werden nach Beendigung des Blasvorgangs mindestens ein Teil des verwendeten Prozessgases kaskadenartig in diejenigen Gasspeicher (61, 62, 63), die einen niedrigeren vorbestimmten Gasdruck (P1, P2, P3) aufweisen, zurückgeführt.

Mindestens bei Start eines Produktionsprozesses zur Herstellung mehrerer der Hohlkörper (H) wird vor dem erstmaligen Ausführen der Schritte a) bis c) das Prozessgas gemäss einer Sonderrezeptur in mindestens einen ersten Vorformling (V) eingebracht zur Herstellung eines Hohlkörpers (H) in ähnlicher oder gleicher Qualität wie mit der Normalrezeptur, wobei sich die Sonderrezeptur von der Normalrezeptur unterscheidet.

Das erfindungsgemässe Verfahren und die erfindungsgemässe Vorrichtung ermöglichen ein mehrstufiges Blasen mit mehrstufiger Rekuperation bei gleichzeitiger Reduktion der Kosten.

## Beschreibung

### TECHNISCHES GEBIET

Die vorliegende Erfindung betrifft ein Verfahren und eine Vorrichtung zum Blasformen, vorzugsweise zum Streckblasformen und noch bevorzugter zum Streckblasformen von Kunststoffhohlköpern wie beispielsweise PP- Flaschen (PP = Polypropylen) oder PET-Flaschen (PET = Polyethylenterephthalat).

### STAND DER TECHNIK

Hohlkörper aus thermoplastischen Kunststoffen, insbesondere PP Flaschen oder PET-Flaschen (PP = Polypropylen) werden üblicherweise mittels Blasmaschinen hergestellt. Hierfür wird ein gewärmter Rohling oder Vorformling in einer Blasform der Blasmaschine gehalten und durch Einblasen eines Prozessgases, üblicherweise Druckluft, aufgeblasen, bis er seine endgültige Form erreicht hat. Seine endgültige Form wird durch eine umschliessende Blasform definiert.

Das Einblasen des Prozessgases erfolgt vorzugsweise in zwei oder mehr Stufen, wobei der Druck des Prozessgases in den einzelnen Stufen unterschiedlich gross ist. Üblicherweise erfolgt ein Vorblasen mit einem ersten Druck und ein anschliessendes Hauptblasen mit mindestens einem zweiten Druck. Der mindestens eine zweite Druck ist grösser als der erste Druck.

Je nach Verfahren wird nur geblasen, oder der Rohling wird zudem während des Vorblasens mittels eines verschiebbaren Dorns gestreckt. Die einzelnen Prozessschritte werden über jeweilige Ventile gesteuert, hier Prozessventile genannt. Die Herstellung bzw. Formung derartiger Hohlkörper mittels Blasmaschinen erfolgt innerhalb weniger Sekunden, vorzugsweise innerhalb von 1 bis 3 s.

Die Druckluft wird mittels eines Kompressors hergestellt mit entsprechend grossem Bedarf an elektrischer Energie. Die Erzeugung der Druckluft trägt wesentlich zu den Produktionskosten bei der Herstellung von derartigen Hohlkörpern bei. Zudem ist der CO₂ - Fussabdruck relativ gross.

Zur Reduzierung des Verbrauchs an Prozessgas, insbesondere von Druckluft, wird das Prozessgas mindestens teilweise rückgewonnen, d.h. es wird rekuperiert. Allfälliges restliches Prozessgas, insbesondere beim Entlüften des Hohlkörpers, wird nach aussen geführt, der Hohlkörper somit entlüftet.

EP 1 974 892 A2 beschreibt ein Rekuperieren über einen mehrstufigen Blasprozess mit einem kaskadenartigen Hauptblasen unter Verwendung von ansteigenden Gasdrücken. Die Blasvorrichtung weist für jede Blasstufe einen Gasspeicher auf, der während des Blasprozesses mit rekuperierter Druckluft der Druckstufe mit dem nächstgrösseren Druck befüllt wird. Der Gasspeicher mit dem grössten Druck wird von einer Druckgasquelle befüllt. Die erste Befüllung der weiteren Gasspeicher erfolgt mit Gas aus dem Gasspeicher, der den grössten Gasdruck aufweist. Hierzu ist eine Leitung vorgesehen, die von diesem druckhöchsten Gasspeicher zu den weiteren Gasspeichern führt. Dabei sind Druckminderer für jeden dieser weiteren Gasspeicher vorhanden, damit dieser höchste Druck auf den gewünschten Nenn-Druck des jeweiligen Gasspeichers gesenkt wird. Derartige Druckminderer sind kostenintensiv, benötigen Platz und sind aufwändig in der Montage.

EP 1 777 056 A1 beschreibt ebenfalls einen mehrstufigen Blasprozess unter Verwendung von mehreren Gasspeichern, die über den rekuperierten Druck der jeweils druckhöheren Stufe gefüllt werden. Die Erstbefüllung erfolgt mittels Kompressoren, wobei jedem Gasspeicher ein eigener Kompressor zugeordnet ist.

EP 1 905 569 A2 offenbart einen kaskadierten Blasprozess, bei welchem zuerst mit einem niederen Druck Prozessgas in den Vorformling eingebracht wird und anschliessend mit höherem Druck die endgültige Form des Hohlkörpers erhalten wird. Hierzu sind zwei Druckgasquellen vorhanden. Ferner ist mindestens ein Gasspeicher vorhanden mit einem Druck, der zwischen dem niederen Druck und dem höheren Druck liegt. Dieser Gasspeicher ist zu Beginn des Produktionsprozesses leer. Er dient der Rückgewinnung des verwendeten Hochdruck-Prozessgases. Das rekuperierte Prozessgas wird bei der Herstellung von weiteren Hohlkörpern gemeinsam mit dem Prozessgas mit niederem und höherem Druck verwendet. Die Hohlkörper, die vor bzw. während der Befüllung dieses Gasspeichers hergestellt werden, weisen deshalb nicht dieselbe Qualität auf wie die nachfolgend hergestellten, so dass sie als Ausschuss entsorgt werden müssen. Auch besteht während der Produktion das Risiko, dass Druckabfälle im Gasspeicher zu erhöhtem Ausschuss führen.

### DARSTELLUNG DER ERFINDUNG

Es ist deshalb eine Aufgabe der Erfindung, ein mehrstufiges Blasformen mit Rekuperation zu ermöglichen, das kostenoptimiert ist.

Diese Aufgabe löst ein Verfahren mit den Merkmalen des Anspruchs 1 sowie eine Vorrichtung mit den Merkmalen des Anspruchs 9.

Im erfindungsgemässen Verfahren zum Herstellen von Hohlkörpern aus Vorformlingen mittels Blasformen,
a) wird ein Vorformling bereitgestellt,
b) wird ein Prozessgas gemäss einer Normalrezeptur kaskadenartig aus mindestens drei Gasspeichern mit unterschiedlichen vorbestimmten Gasdrücken mit entsprechend ansteigendem Prozessdruck in ein Innenvolumen eines der Vorformlinge eingebracht, wobei der zuletzt verwendete Gasspeicher den höchsten vorbestimmten Gasdruck aufweist, und
c) wird nach Beendigung des Blasvorgangs mindestens ein Teil des verwendeten Prozessgases kaskadenartig in diejenigen Gasspeicher, die einen niedrigeren vorbestimmten Gasdruck aufweisen, zurückgeführt.

Die Schritte a) bis c) des Verfahrens werden mit mindestens einem weiteren Vorformling der Vorformlinge wiederholt.

Erfindungsgemäss wird mindestens bei Start eines Produktionsprozesses zur Herstellung mehrerer Hohlkörper vor dem erstmaligen Ausführen der Schritte a) bis c) das Prozessgas gemäss einer Sonderrezeptur in mindestens einen ersten Vorformling eingebracht zwecks Herstellung eines Hohlkörpers in ähnlicher oder gleicher Qualität wie mit der Normalrezeptur, wobei sich die Sonderrezeptur von der Normalrezeptur unterscheidet.

Der vorbestimmte Gasdruck wird auch Nenndruck oder Solldruck genannt.

Dieses Verfahren ermöglicht die Verwendung eines mehrstufigen Blasprozesses mit gleichzeitiger Rekuperation von Prozessgas, ohne dass eine Vielzahl von Druckgasquellen oder eine Vielzahl an teuren Druckminderern verwendet werden müssen. Des Weiteren ist der Ausschuss an nicht verwendbaren formgeblasenen Hohlkörpern minimiert. Diese Kombination minimiert somit den Druckluftverbrauch, minimiert die CO₂ Emission, minimiert den Platzbedarf der Vorrichtungen und minimiert die Kosten für die Vorrichtung und deren Betrieb. Trotzdem lassen sich dank des kaskadierten Druckaufbaus im Vorformling qualitativ hochwertige Hohlkörper herstellen.

Vorzugsweise werden in Schritt c) die Gasspeicher in der Reihenfolge ihrer vorbestimmten Gasdrücke mit dem verwendeten Prozessgas nachgefüllt, beginnend mit dem Gasspeicher, der einen zweithöchsten vorbestimmten Druck aufweist.

Verwendetes Prozessgas mit einem Druck, der niedriger ist als der niedrigste vorbestimmte Gasdruck, wird vorzugsweise einer Entlüftung zugeführt.

Vorzugsweise wird die Sonderrezeptur so lange angewandt, bis die Gasdrücke der mit Rekuperationsgas, d.h. mit verwendetem Prozessgas, befüllbaren Gasspeicher den jeweiligen vorbestimmten Gasdrücken entsprechen. Dies kann je nach Variante des Verfahrens mehrere Vorformlinge betreffen oder, wenn eine Rotationsmaschine verwendet wird, kann dies ein bis zwei Blasradumdrehungen dauern.

Vorzugsweise verwendet die Sonderrezeptur Prozessgas aus mindestens zwei der Gasspeicher, wobei beide Gasspeicher vorzugsweise von derselben Druckgasquelle befüllt worden sind. Vorzugsweise ist dies die ausschliessliche Druckgasquelle. Das Druckgas ist vorzugsweise Druckluft.

Vorzugsweise ist einer der zwei mit der Druckgasquelle verbundenen Gasspeicher derjenige Gasspeicher mit dem höchsten vorbestimmten Gasdruck, d.h. der druckhöchste Gasspeicher. Der andere dieser zwei Gasspeicher wird vorzugsweise lediglich für die Verwendung der Sonderrezeptur mittels der Druckgasquelle befüllt. Während der Verwendung der Normalrezeptur wird dieser andere Gasspeicher mit verwendetem Prozessgas gefüllt. Vorzugsweise ist der Gasdruck im anderen Gasspeicher bei Befüllung durch die Druckgasquelle niedriger als bei Befüllung mit verwendetem Prozessgas, um eine einfache Rekuperation des verwendeten Prozessgases zu ermöglichen. In anderen Varianten ist der Gasdruck im anderen Gasspeicher gleich hoch wie im Normalbetrieb.

Dieser andere der zwei Gasspeicher weist vorzugsweise den niedrigsten Gasdruck auf, er ist somit der druckniedrigste Gasspeicher. Der Gasspeicher mit dem niedrigsten Druck wird vorzugsweise zum Vorblasen verwendet.

Die Sonderrezeptur und die Normalrezeptur werden vorzugsweise mittels einer Steuerung angewandt.

In einigen Varianten wird die Sonderrezeptur ausschliesslich beim Starten des Produktionsprozesses verwendet. In anderen Varianten wird sie zudem verwendet im Falle eines Absinkens des vorbestimmten Drucks in einem der mittels Rekuperationsgas gefüllten Gasspeicher. Handelt es sich um denjenigen Gasspeicher, der ebenfalls mittels der Druckgasquelle auffüllbar ist, so lässt er sich je nach Ausführungsform ausschliesslich oder alternativ mittels der Druckgasquelle auffüllen.

Vorzugsweise werden mindestens vier, vorzugsweise genau vier Gasspeicher mit unterschiedlichen vorbestimmten Gasdrücken verwendet. Vorzugsweise werden mindestens drei, vorzugsweise genau drei Rekuperationsstufen verwendet. Mittels der Rekuperation bzw. Rückgewinnung des verwendeten Prozessgases ist dadurch ein achtstufiger Herstellungsprozess vorhanden. Achtstufige Herstellungsprozesse ermöglichen eine massive Einsparung der Druckgasenergie dank den vier Stufen beim Blasen und dank der dreifachen Rekuperation.

Die Sonderrezeptur lässt sich auf unterschiedliche Art und Weise ausbilden bzw. anwenden. Sie verwendet die zur Verfügung stehende Druckluft, berücksichtigt dabei jedoch, dass einige der Gasspeicher noch nicht zur Verfügung stehen. Dank dieser Berücksichtigung weist sie Prozessparameter auf, die ebenfalls zu einem hochwertigen Endprodukt führen, das nicht als Ausschuss entsorgt werden muss.

In einer bevorzugten Ausführungsform unterscheidet sich die Sonderrezeptur von der Normalrezeptur, indem nach dem Vorblasen mit niedrigstem Druck sogleich die Stufe des Hauptblasens mit höchstem Druck, d.h. üblicherweise die letzte Stufe, angewandt wird, d.h. es wird nur Gas aus dem ersten Gasspeicher mit niedrigstem Druck und Gas aus dem Gasspeicher mit höchstem Druck verwendet. Vorzugsweise entsprechend die Zeiten des Vorblasens und/oder des Hauptblasens gemäss der Sonderrezeptur denjenigen Zeiten der Normalrezeptur.

In einer bevorzugten Variante des Verfahrens verwendet die Sonderrezeptur die Schritte der Normalrezeptur, wobei sie jedoch in Schritt b) von der Normalrezeptur abweicht. Die Abweichung ist wie folgt:
Direkt nachdem Prozessgas aus demjenigen der Gasspeicher, der den niedrigsten vorbestimmten Gasdruck aufweist, in den ersten Vorformling eingeblasen worden ist, wird Prozessgas aus dem Gasspeicher mit dem höchsten Gasdruck eingebracht unter Auslassung eines Öffnens der anderen Gasspeicher. Die Sonderrezeptur führt anschliessend gleich wie die Normalrezeptur den oben angegebenen Schritt c) durch.

In anderen erfindungsgemässen Varianten lassen sich beispielsweise Vergleich zur Normalrezeptur andere Zeiten für die Anwendung der zur Verfügung stehenden Gasdrücke verwenden.

Die Sonderrezeptur bestimmt die Dauer des Einblasens des Prozessgases mit dem niedrigsten Druck, den Zeitpunkt sowie die Dauer des Einblasens des Prozessgases mit dem höchsten Druck. Die Sonderrezeptur bestimmt zudem die Höhe des niedrigsten Drucks, der vorzugsweise tiefer liegt als derjenige der Normalrezeptur. Alle diese genannten Parameter sind je nach Sonderrezeptur gleich oder anders als diejenigen der Normalrezeptur. Vorzugsweise ist mindestens die Dauer des Einblasens des Prozessgases mit höchstem vorbestimmtem Gasdruck gemäss Sonderrezeptur länger als die Dauer des Einblasens des Prozessgases mit höchstem vorbestimmtem Gasdruck gemäss Normalrezeptur.

In einigen Varianten füllt ein Druckminderer den druckniedrigsten Gasspeicher mit einem tieferen Druck als in Normalrezeptur erwartet wird. Dies hat den Vorteil, dass die Luftzufuhr via Druckminderer automatisch geschlossen wird, weil nach dem Druckminderer ein höherer Druck anliegt. In anderen Varianten ist der Druck im druckniedrigsten Gasspeicher im Normal- wie auch im Sonderbetrieb nahezu gleich. Das lässt sich erreichen, indem der druckniedrigste Gasspeicher bereits bei Anwendung der Sonderrezeptur auf den Solldruck eingestellt wird und bei anschliessender Anwendung der Normalrezeptur die Einstellung des zwischen Druckgasquelle und druckniedrigstem Gasspeicher angeordnete Druckminderer leicht reduziert wird, so dass ein der druckniedrigste Gasspeicher einen reduzierten Solldruck aufweist, so dass dieser Gasspeicher im Normalbetrieb nicht mehr vom von der Druckgasquelle nachgefüllt wird. Die Änderung der Einstellung des Druckminderers erfolgt vorzugsweise automatisch mittels der Steuerung beim Wechseln von der Sonderrezeptur zur Normalrezeptur.

Die erfindungsgemässe Vorrichtung zur Herstellung von Hohlkörpern aus Vorformlingen mittels Blasformen lässt sich vorzugsweise, jedoch nicht ausschliesslich gemäss dem oben beschriebenen Verfahren verwenden.

In einer bevorzugten Ausführungsform weist die Vorrichtung mindestens drei Prozessventile und mindestens drei Gasspeicher mit unterschiedlichen vorbestimmten Gasdrücken auf. Ein erster der Gasspeicher weist einen niedrigen Gasdruck auf und ein anderer der Gasspeicher den höchsten Gasdruck. Jedem Gasspeicher ist mindestens eines der Prozessventile zugeordnet, um Prozessgas kaskadenartig mit ansteigendem Gasdruck aus den mindestens drei Gasspeichern in ein Innenvolumen des Vorformlings einzublasen und um, mit Ausnahme des Gasspeichers mit einem höchsten vorbestimmten Gasdruck, verwendetes Prozessgas kaskadenartig in die Gasspeicher zurückzuführen. Mindestens einige der Gasspeicher, die einen vorbestimmten Gasdruck aufweisen, der niedriger liegt als der höchste Gasdruck, sind ausschliesslich mittels Rückführung des verwendeten Prozessgases befüllbar. Erfindungsgemäss ist genau eine Druckgasquelle vorhanden, wobei der erste Gasspeicher und der andere Gasspeicher von der Druckgasquelle befüllbar sind und wobei der erste Gasspeicher zusätzlich mittels Rückführung des verwendeten Prozessgases befüllbar ist.

Diese Vorrichtung lässt sich kostengünstig herstellen und benötigt wenig Platz. Dies dank der lediglich einen Druckgasquelle und der minimalen Anzahl an Druckminderern, wobei auch gänzlich auf Druckminderer verzichtet werden kann.

Vorzugsweise weist der erste Gasspeicher den niedrigsten vorbestimmten Gasdruck auf. Vorzugsweise ist der Gasspeicher mit dem niedrigsten vorbestimmten Gasdruck ein Gasspeicher für das Hauptblasen oder ein Gasspeicher für das Vorblasen.

Vorzugsweise sind die mittels Rückführung befüllbaren Gasspeicher mittels der ihnen zugeordneten Prozessventile befüllbar. Dies minimiert die Kosten ebenfalls, da wenige Ventile und lediglich wenige und kurze Leitungen vorhanden sind.

In bevorzugten Ausführungsformen sind mindestens vier, vorzugsweise genau vier Gasspeicher mit unterschiedlichen vorbestimmten Gasdrücken vorhanden.

In bevorzugten Ausführungsformen sind mehrere Blasformen bzw. Ventilblöcke vorhanden, wobei jedem der Gasspeicher Prozessventile von mehreren Blasformen bzw. Ventilblöcken zugeordnet sind. Die Prozessventile, die einem gemeinsamen Gasspeicher zugeordnet sind, führen vorzugsweise zu je einem eigenen Ventilblock bzw. zu je einer eigenen Blasform. Dies minimiert den Platzbedarf der Vorrichtung und reduziert die Kosten.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Figur 1: eine schematische Darstellung einer erfindungsgemässen Vorrichtung;
- Figur 2: einen Druckverlauf des Prozessgases in der Vorrichtung gemäss Figur 1 nach Massgabe einer Normalrezeptur;
- Figur 3: einen Druckverlauf des Prozessgases, wenn die Normalrezeptur gemäss Figur 2 beim Starten des Produktionsprozesses verwendet würde und
- Figur 4: einen Druckverlauf des Prozessgases in der Vorrichtung gemäss Figur 1 nach Massgabe einer Sonderrezeptur.

### BESCHREIBUNG BEVORZUGTER AUSFÜHRUNGSFORMEN

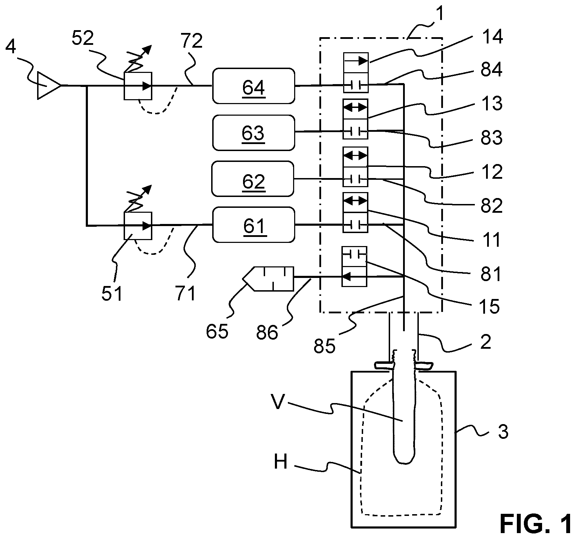

In Figur 1 ist schematisch eine erfindungsgemässe Vorrichtung dargestellt. Sie weist einen Ventilblock 1 mit mehreren Prozessventilen 11, 12, 13, 14 auf sowie mit einem Entlüftungsventil 15. Die Ventile sind über eine gemeinsame Hauptleitung 85 mit einer Blasdüse 2 verbunden, die an einer Blasform 3 angeordnet ist. Die Blasform 3 dient zur Aufnahme eines Vorformlings V aus einem thermoplastischen Kunststoff, insbesondere aus PET oder PP. Die Blasdüse 2 bläst Druckluft in den Vorformling V und bläst ihn zu einem Hohlkörper H auf, dessen endgültige Form durch die Blasform 3 bestimmt wird.

Eine Druckgasquelle 4 ist über eine erste Druckfüllleitung 71 und einem ersten Druckminderer 51 mit einem ersten Gasspeicher 61 verbunden. Der Druckminderer 51 ist nicht zwingend notwendig, jedoch vorteilhaft, insbesondere bei Verwendung für den druckniedrigsten Gasspeicher. Vom ersten Gasspeicher führt eine erste Prozessleitung 81 durch ein erstes Prozessventil 11 zur Hauptleitung 85.

Es ist mindestens ein weiterer Gasspeicher vorhanden, der nicht direkt mit der Druckgasquelle verbunden sind. In diesem Beispiel sind zwei weitere Gasspeicher vorhanden, nachfolgend zweiter Gasspeicher 62 und ein dritter Gasspeicher 63 genannt. Vom zweiten Gasspeicher 62 führt eine zweite Prozessleitung 82 durch ein zweites Prozessventil 12 zur Hauptleitung 85. Vom dritten Gasspeicher 63 führt eine dritte Prozessleitung 83 durch ein drittes Prozessventil 13 zur Hauptleitung 85.

Ein vierter Gasspeicher 64 ist wiederum über eine zweite Befüllungsleitung 72 und einem zweiten Druckminderer 52 mit der Druckgasquelle 4 verbunden. Der Druckminderer 52 ist nicht zwingend notwendig. Insbesondere für den druckhöchsten Gasspeicher lässt sich auch der Kompressordruck der Druckgasquelle verwenden. Vom vierten Gasspeicher 64 führt eine vierte Prozessleitung 84 durch ein viertes Prozessventil 14 zur Hauptleitung 85.

Das Entlüftungsventil 15 verbindet die Hauptleitung 85 mittels einer Entlüftungsleitung 86 mit einem Schalldämpfer 65 und anschliessend mit der Umgebung.

Die Druckgasquelle 4 ist vorzugsweise ein Kompressor. Vorzugsweise ist es die einzige Druckgasquelle 4. Druckminderer verringern den Gasdruck auf einen gewünschten vordefinierten Gasdruck. Sie sind im Stand der Technik bekannt.

Der erste Gasspeicher 61 weist den niedrigsten Gasdruck auf, der vierte Gasspeicher 64 den höchsten. Die Gasdrücke der übrigen Gasspeicher 62, 63 sind ebenfalls unterschiedlich, wobei der zweite Gasspeicher 62 einen höheren Gasdruck aufweist als der erste Gasspeicher 61 und der dritte Gasspeicher 63 einen höheren Grasdruck aufweist als der zweite Gasspeicher 62, jedoch einen tieferen als der vierte Gasspeicher 64. Es können noch weitere Gasspeicher vorhanden sein, die ebenfalls kaskadiert unterschiedliche Gasdrücke aufweisen. Diese weiteren Gasspeicher lassen sich wie der zweite und dritte Gasspeicher 62, 63 ebenfalls ausschliesslich über Rekuperation befüllen und sind nicht mit einer Druckgasquelle verbunden.

Die Prozessventile 11, 12, 13, 14 sind vorzugsweise 2/2 Wegeventile, die einen Durchfluss in beide Richtungen ermöglichen. Das Entlüftungsventil ist vorzugsweise ebenfalls ein 2/2 Wegeventil, welches jedoch nur in einer Richtung durchströmt wird.

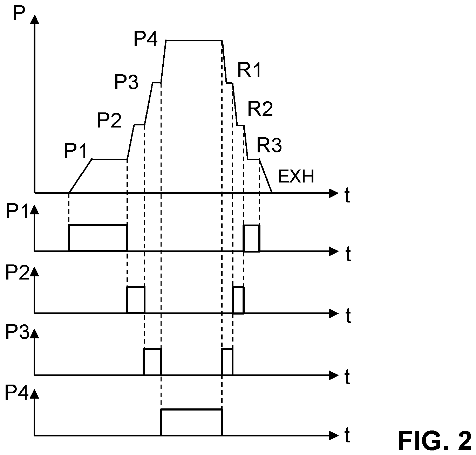

In Figur 2 ist ein Blasprozess dargestellt, der einen Vorformling zu einem Hohlkörper, insbesondere einer PET oder PP Flasche formt. Vorzugsweise zeigt die Darstellung einen vollständigen Blasprozess mit Vor- und dem kaskadenartigen Hauptblasen.

Auf der Abszissenachse ist die Zeit t angegeben, während der Prozessgas in den Vorformling geblasen wird und während der das verwendete Prozessgas aus dem Hohlkörper weggeführt wird. Auf der Ordinatenachse ist der Gasdruck P des Prozessgases dargestellt.

Die obere Grafik zeigt das Gesamtsystem, die vier darunter angeordneten Grafiken zeigen die Zeitpunkte des Bezugs und die Dauer des Bezugs der Prozessgase aus den einzelnen Gasspeichern 61, 62, 63, 64.

Figur 2 zeigt den Normalbetrieb. D.h. der Betrieb, wenn alle Gasspeicher 61, 62, 63, 64 gefüllt und zum stufenweisen Formblasen von Hohlkörpern einsatzbereit sind.

In einem ersten Schritt wird das erste Prozessventil 11 geöffnet, und Prozessgas aus dem ersten Gasspeicher 61 gelangt in die Hauptleitung 85 und dadurch in den Vorformling V. Dieses Prozessgas weist den Druck P1 auf, welcher der niedrigste der vier Gasdrücke ist.

In einem zweiten Schritt wird das erste Prozessventil 11 geschlossen und das zweite Prozessventil 12 geöffnet. Prozessgas mit einem höheren Druck P2 strömt nun vom zweiten Gasspeicher 62 in die Hauptleitung 85. In einem dritten Schritt wird das zweite Prozessventil 12 geschlossen und das dritte Prozessventil 13 geöffnet. Prozessgas mit einem noch höheren Druck P3 strömt nun vom dritten Gasspeicher 63 in die Hauptleitung 85.

Im vierten Schritt wird das dritte Prozessventil 13 geschlossen und das vierte Prozessventil 14 geöffnet. Prozessgas mit dem höchsten Druck P4 strömt vom vierten Gasspeicher 64 in die Hauptleitung 85.

Nach diesem vierten Schritt und nach Schliessen des vierten Ventils 64 ist der Hohlkörper H vollständig ausgeformt. Durch Öffnen des dritten Prozessventils 13 in die umgekehrte Richtung gelangt verwendetes Prozessgas aus der Hauptleitung 85 und aus dem Hohlkörper H in den dritten Gasspeicher 63. Eine erste Rekuperation R1 findet statt. Dies ist der fünfte Schritt. Nach Schliessen des dritten Prozessventils 13 und Öffnen des zweiten Prozessventils 12 in die umgekehrte Richtung gelangt verwendetes Prozessgas, das nun einen niedrigeren Druck aufweist, in den zweiten Gasspeicher 62. Dies ist der sechste Schritt und die zweite Rekuperation R2. In einem siebten Schritt wird das zweite Prozessventil 12 geschlossen und das erste Prozessventil 11 geöffnet, um eine analoge dritte Rekuperation R3 in den ersten Gasspeicher 11 zu ermöglichen. In einem achten Schritt wird das nun massiv druckverminderte verwendete Prozessgas über das Entlüftungsventil 15 und den Schalldämpfer 65 in die Umgebung abgegeben. Dieser Schritt ist in Figur 2 mit dem Bezugszeichen EXH versehen.

Die Prozessventile 11, 12, 13, 14 schalten somit während eines Blasprozesses, d.h. einem Zyklus zur Herstellung des Hohlkörpers H, jeweils zweimal. Einmal beim Blasen in den Vorformling V, einmal beim Vermindern des Gasdruckes in der Hauptleitung 85 und im Hohlkörper H.

In diesem Normalprozess wird der vierte Gasspeicher 64 bei Bedarf mittels der Druckgasquelle 4 auf das vorgegebene Druckniveau aufgefüllt. Die übrigen Gasspeicher 61, 62, 63 werden ausschliesslich mittels zurückgewonnenem verwendeten Prozessgas gespiesen. Im Falle eines Druckabfalls im ersten Gasspeicher 61 ist es in einigen Ausführungsformen auch möglich, diesen mittels der Druckgasquelle 4 wieder auf den gewünschten vorbestimmten Gasdruck zu heben.

Die Normalrezeptur gibt Dauer und Zeitpunkte der Zuführung des Prozessgases aus den einzelnen Gasspeichern vor. Drucksensoren überwachen die Drücke in den Gasspeichern 61, 62, 63, 64. Eine nicht dargestellte Steuerung steuert das Öffnen und Schliessen der Prozessventile 11, 12, 13, 14, des Rückschlagventils 15 und der zwei Druckminderer 51, 52 nach Massgabe der Normalrezeptur.

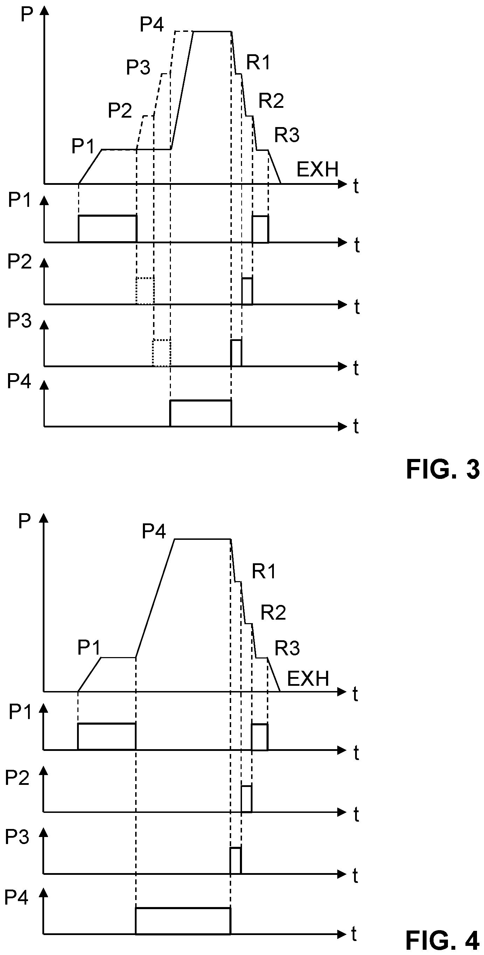

Figur 3 veranschaulicht, was bei Verwendung dieser Normalrezeptur geschehen würde, wenn sie auch beim Starten des Herstellungsprozesses, also bei noch nicht gefülltem zweiten und dritten Gasspeicher 62, 63 geschehen würde. Die Gasdrücke gemäss Figur 2 sind gestrichelt dargestellt. Die tatsächlich vorhandenen Gasdrücke mit ausgezogenen Linien.

Der Prozessdruck aus dem mittels der Druckgasquelle 4 gefüllten ersten Gasspeicher 61 würde mit Druck P1 in den Vorformling V gelangen. Das Öffnen des zweiten und dritten Gasspeichers 62, 63 würde zu einer Druckreduktion im Vorformling V führen.

Der Druck würde somit erst mit Verzögerung über das Niveau P1 steigen und weniger lang auf höchstem Niveau mit Gasdruck P4 verbleiben, wie in Figur 3 gut erkennbar ist. Dies führt zu Hohlkörpern H, die nicht den Qualitätsansprüchen genügen. Beispielsweise weil sie nicht genügend ausgeformt sind oder weil sie ihre Form nicht genügend gleichmässig erreicht haben. Sie sind Ausschuss und müssen entsorgt werden.

In Figur 4 ist deshalb eine Sonderrezeptur dargestellt, die vor der Verwendung der Normalrezeptur, d.h. bei noch leerem zweiten und dritten Gasspeicher 62, 63 verwendet werden kann. Sie kann auch während des Normalbetriebs verwendet werden, wenn hohe Druckabfälle im zweiten und/oder im dritten Gasspeicher 62, 63 oder auch im ersten Gasspeicher 61 auftreten.

Bei der Sonderrezeptur wird ebenfalls sichergestellt, dass der erste und der vierte Gasspeicher 61, 64 mittels der gemeinsamen Druckgasquelle 4 gefüllt und auf ihre vorbestimmten Gasdruckniveaus gebracht sind. Vorzugsweise ist das Gasdruckniveau des ersten Gasspeichers 61 bei der Auffüllung mittels der Druckgasquelle 4 etwas tiefer als das vorbestimmte Gasdruckniveau bei Speisung mittels Rekuperation.

Anschliessend wird Prozessgas mit Gasdruck P1 aus dem ersten Gasspeicher 61 in den Vorformling V geblasen. Nach einer vorgegebenen Zeit wird das erste Prozessventil 11 geschlossen und direkt das vierte Prozessventil 14 geöffnet. Dadurch speist nun unmittelbar nach dem ersten Gasspeicher 61 der vierte Gasspeicher 64 den Vorformling V mit Prozessdruck P4, d.h. dem höchsten Prozessdruck. Der Druck im Vorformling V steigt schneller an und kann die notwendige Zeit auf höchstem Niveau gehalten werden. Dies ist in Figur 4 gut erkennbar. Die Sonderrezeptur bestimmt den Zeitpunkt und die Dauer der Beaufschlagung des Innenraums des Vorformlings V mit dem vierten Prozessdruck P4. Diese Zeitdauer ist vorzugsweise länger als in der Normalrezeptur und beginnt früher. In einer bevorzugten Variante dauert das Vorblasen gemäss Sonderrezeptur und Normalrezeptur genau gleich lang und das Hauptblasen dauert ebenfalls gleich lange, wobei bei der Sonderrezeptur beim Hauptblasen sofort nach dem Vorblasen das Gas aus dem druckhöchsten Gasspeicher verwendet wird, d.h. im Hauptblasen keine Kaskade verwendet wird.

Die Rekuperationen R1, R2, R3 erfolgen vorzugsweise gleich wie im Normalprozess, wobei dadurch der zweite Gasspeicher 62 und der dritte Gasspeicher 63 auf ihre vorbestimmten Gasdruck-Niveaus gefüllt werden.

Die Sonderrezeptur muss je nach Ausführungsform bei mehr als einem Vorformling durchgeführt werden, damit die zwei mittleren Gasspeicher 62, 63 für die Verwendung der Normalrezeptur einsatzbereit sind. Während der Wiederholung der Sonderrezeptur ist je nach Ausführungsform eine erneute Befüllung des ersten Gasspeichers 61 mittels der Druckgasquelle 4 notwendig oder nicht mehr notwendig.

Bei Verwendung der Sonderrezeptur schaltet das erste Prozessventil 11 nach wie vor zweimal pro Blaszyklus, das zweite und das dritte Prozessventil 12, 13 schalten jedoch nur einmal, nämlich für die erste bzw. zweite Rekuperation R1, R2.

Das Umschalten zwischen Normalrezeptur und Sonderrezeptur lässt sich beispielsweise zeitgesteuert oder mittels Drucküberwachung der einzelnen Gasspeicher, mindestens des zweiten und des dritten Gasspeichers 62, 63, durchführen. Das Umschalten erfolgt vorzugsweise automatisch mittels einer Steuerung.

Diese Vorrichtung und das damit verbundene Verfahren lassen sich sowohl bei Rotationsblasmaschinen wie auch bei Linearblasmaschinen verwenden. Es lassen sich grosse Gasspeicher verwenden, die für mehrere Vorformlinge V gleichzeitig den für die Herstellung notwendigen Prozessdruck liefern.

Das erfindungsgemässe Verfahren und die erfindungsgemässe Vorrichtung ermöglichen ein mehrstufiges Blasen mit mehrstufiger Rekuperation bei gleichzeitiger Reduktion der Kosten.

### BEZUGSZEICHENLISTE

- 1: Ventilblock
- 11: erstes Prozessventil
- 12: zweites Prozessventil
- 13: drittes Prozessventil
- 14: viertes Prozessventil
- 15: Entlüftungsventil

- 2: Blasdüse

- 3: Blasform

- 4: Druckgasquelle

- 51: erster Druckminderer
- 52: zweiter Druckminderer

- 61: erster Gasspeicher
- 62: zweites Gasspeicher
- 63: drittes Gasspeicher
- 64: viertes Gasspeicher
- 65: Schalldämpfer

- 71: erste Befüllungsleitung
- 72: zweite Befüllungsleitung

- 81: erste Prozessleitung
- 82: zweite Prozessleitung
- 83: dritte Prozessleitung
- 84: vierte Prozessleitung
- 85: Hauptleitung
- 86: Entlüftungsleitung

- EXH: Entlüftung
- H: Hohlkörper
- P: Gasdruck
- P1: erster Prozessdruck
- P2: zweiter Prozessdruck
- P3: dritter Prozessdruck
- P4: vierter Prozessdruck
- R1: erste Rekuperation
- R2: zweite Rekuperation
- R3: dritte Rekuperation
- t: Zeit
- V: Vorformling

## Patentansprüche

1. Verfahren zum Herstellen von Hohlkörpern (H) aus Vorformlingen (V) mittels Blasformen, wobei
a) ein Vorformling (V) bereitgestellt wird,
b) wobei ein Prozessgas gemäss einer Normalrezeptur kaskadenartig aus mindestens drei Gasspeichern (61, 62, 63, 64) mit unterschiedlichen vorbestimmten Gasdrücken (P1, P2, P3, P4) mit entsprechend ansteigendem Prozessdruck in ein Innenvolumen eines der Vorformlinge (V) eingebracht wird, wobei der zuletzt verwendete Gasspeicher (64) den höchsten vorbestimmten Gasdruck (P4) aufweist, und
c) wobei nach Beendigung des Blasvorgangs mindestens ein Teil des verwendeten Prozessgases kaskadenartig in diejenigen Gasspeicher (61, 62, 63), die einen niedrigeren vorbestimmten Gasdruck (P1, P2, P3) aufweisen, zurückgeführt wird, und
wobei die Schritte a) bis c) des Verfahrens mit mindestens einem weiteren Vorformling (V) der Vorformlinge wiederholt werden,
**dadurch gekennzeichnet,**
**dass** mindestens bei Start eines Produktionsprozesses zur Herstellung mehrerer der Hohlkörper (H) vor dem erstmaligen Ausführen der Schritte a) bis c) das Prozessgas gemäss einer Sonderrezeptur in mindestens einen ersten Vorformling (V) eingebracht wird zur Herstellung eines Hohlkörpers (H) in ähnlicher oder gleicher Qualität wie mit der Normalrezeptur, wobei sich die Sonderrezeptur von der Normalrezeptur unterscheidet.

2. Verfahren nach Anspruch 1, wobei die Sonderrezeptur Prozessgas aus mindestens zwei der Gasspeicher (61, 64) verwendet, wobei beide Gasspeicher (61, 64) von derselben Druckgasquelle (4) befüllt worden sind.

3. Verfahren nach Anspruch 2, wobei einer der zwei Gasspeicher (61, 64) der Gasspeicher (64) mit dem höchsten vorbestimmten Gasdruck ist und wobei der andere Gasspeicher (61) der zwei Gasspeicher (61, 64) lediglich für die Verwendung der Sonderrezeptur mittels der Druckgasquelle (4) befüllt wird und während der Verwendung der Normalrezeptur mit verwendetem Prozessgas gefüllt wird, wobei der Gasdruck bei Befüllung durch die Druckgasquelle (4) vorzugsweise niedriger ist als bei Befüllung mit verwendetem Prozessgas.

4. Verfahren nach Anspruch 3, wobei der andere Gasspeicher (61) der zwei Gasspeicher (61, 64) den niedrigsten Gasdruck (P1) aufweist.

5. Verfahren nach einem der Ansprüche 1 bis 4, wobei im Falle eines Absinkens des vorbestimmten Drucks in einem der Gasspeicher (62, 63), die einen niedrigeren Gasdruck (P1, P2, P3) als der höchste Gasdruck (P4) aufweisen, wiederum Prozessgas gemäss der Sonderrezeptur in das Innenvolumen des im Produktionsprozess nächstfolgenden Vorformlings (V) eingebracht wird.

6. Verfahren nach einem der Ansprüche 1 bis 5, wobei mindestens drei, vorzugsweise genau drei Rekuperationsstufen (R1, R2, R3) verwendet werden.

7. Verfahren nach einem der Ansprüche 1 bis 6, wobei die Sonderrezeptur in Schritt b) dadurch von der Normalrezeptur abweicht, dass direkt nachdem Prozessgas aus demjenigen der Gasspeicher (61), der einen niedrigsten vorbestimmten Gasdruck (P1) aufweist, in das Innenvolumen von mindestens einem ersten Vorformling (V) eingebracht worden ist, Prozessgas aus dem Gasspeicher (64) mit dem höchsten Gasdruck (P4) eingebracht wird, wobei die Sonderrezeptur gleich wie die Normalrezeptur anschliessend Schritt c) durchführt.

8. Verfahren nach Anspruch 7, wobei die Dauer des Einblasens des Prozessgases mit dem höchsten vorbestimmten Gasdruck (P4) gemäss Sonderrezeptur länger als die Dauer des Einblasens des Prozessgases mit höchstem vorbestimmtem Gasdruck (P4) gemäss Normalrezeptur ist.

9. Vorrichtung zur Herstellung von Hohlkörpern (H) aus Vorformlingen (V) mittels Blasformen, vorzugsweise unter Verwendung des Verfahrens gemäss einem der Ansprüche 1 bis 8,
wobei die Vorrichtung mindestens drei Prozessventile (11, 12, 13, 14) und mindestens drei Gasspeicher (61, 62, 63, 64) mit unterschiedlichen vorbestimmten Gasdrücken (P1, P2, P3, P4) aufweist, wobei ein erster der Gasspeicher (61) einen niedrigsten Gasdruck (P1) aufweist und ein anderer (64) der Gasspeicher einen höchsten Gasdruck (P4) aufweist,
wobei jedem Gasspeicher (61, 62, 63, 64) mindestens eines der Prozessventile (11, 12, 13, 14) zugeordnet ist,
um Prozessgas kaskadenartig mit ansteigendem Gasdruck aus den mindestens drei Gasspeichern (61, 62, 63, 64) in ein Innenvolumen des Vorformlings (V) einzublasen,
und um, mit Ausnahme des Gasspeichers (64) mit einem höchsten vorbestimmten Gasdruck (P4), verwendetes Prozessgas kaskadenartig in die Gasspeicher (61, 62, 63, 64) zurückzuführen,
wobei mindestens ein Teil der Gasspeicher (62, 63), die einen vorbestimmten Gasdruck aufweisen, der niedriger liegt als der höchste Gasdruck (P4), ausschliesslich mittels Rückführung des verwendeten Prozessgases befüllbar sind,
**dadurch gekennzeichnet,**
**dass** genau eine Druckgasquelle (4) vorhanden ist,
**dass** der erste Gasspeicher (61) und der andere Gasspeicher (64) von der Druckgasquelle (4) befüllbar sind und
**dass** der erste Gasspeicher (61) zusätzlich mittels Rückführung des verwendeten Prozessgases befüllbar ist.

10. Vorrichtung nach Anspruch 9, wobei die mittels Rückführung befüllbaren Gasspeicher (61, 62, 63) mittels der ihnen zugeordneten Prozessventile (11, 12, 13) befüllbar sind.

11. Vorrichtung nach einem der Ansprüche 9 oder 10, wobei der erste Gasspeicher (61) den niedrigsten vorbestimmten Gasdruck (P1) aufweist und der andere Gasspeicher (64) den höchsten vorbestimmten Gasdruck (P4) aufweist.

12. Vorrichtung nach Anspruch 11, wobei der Gasspeicher (61) mit dem niedrigsten vorbestimmten Gasdruck (P1) ein Gasspeicher für das Hauptblasen ist oder ein Gasspeicher für das Vorblasen ist.

13. Vorrichtung nach einem der Ansprüche 9 bis 12, wobei mindestens vier, vorzugsweise genau vier Gasspeicher (61, 62, 63, 64) mit unterschiedlichen vorbestimmten Gasdrücken (P1, P2, P3, P4) vorhanden sind.

14. Vorrichtung nach einem der Ansprüche 9 bis 13, wobei jeder Gasspeicher (61, 62, 63, 64) mehreren Rückschlagventilen (11, 12, 13, 14) zugeordnet ist, wobei jedes Rückschlagventil (11, 12, 13, 14) zu einer eigenen Blasform (3) führt.
